# EUROPEAN PATENT APPLICATION

(11) **EP 4 439 851 A2**
(43) Date of publication of application: **02.10.2024**
(21) Application number: 24166027.3
(22) Date of filing: 25.03.2024
(51) Int. Cl.: H01M 50/528, H01M 50/533, H01M 50/534, H01M 50/536, H01M 50/55, H01M 50/557, H01M 50/562, H01M 50/566

(54) **BATTERY PACK**

(30) Priority: 26.03.2023 KR 20230039373
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery pack includes a battery cell; an electrode tab extending from the battery cell in a first direction; a connection tab overlapping and bonded to the electrode tab; and a soldering material bonding the electrode tab to the connection tab, wherein the connection tab includes a first metal material and the electrode tab includes second metal material, the first metal material having an affinity to the soldering material that is different from an affinity of the second metal material to the soldering material, the soldering material forms a soldering bridge that has two ends respectively corresponding to first and second thermal bonding points to a portion of the connection tab exposed by the electrode tab, and the soldering bridge connects the first and second thermal bonding points to each other and extends across a portion of the electrode tab between the first and second thermal bonding points.

## Description

### BACKGROUND

### 1. Field

Embodiments relate to a battery pack.

### 2. Description of the Related Art

In general, secondary batteries may be charged and discharged, unlike primary batteries that cannot be charged . Secondary batteries may be used as energy sources for mobile devices, electric vehicles, hybrid vehicles, electric bicycles, uninterruptible power supplies, etc. Depending on the type of external devices to which secondary batteries are applied, the secondary batteries may be used in the form of a single battery or a module in which a plurality of batteries are connected and bundled into a unit or battery pack.

### SUMMARY

One or more embodiments include a battery pack. In an electrical connection between an electrode tab and a connection tab that form a charging/discharging path of a battery cell of the battery pack, the electrode tab has relatively low affinity to a soldering material, and thus, it is difficult to form direct thermal-bonding with the soldering material. Therefore, the electrode tab and the connection tab are bonded to each other by thermal-bonding between a soldering material and the connection tab having good affinity to the soldering material. Even in the case of an electrode tab that is difficult to be used for thermal-bonding, such as soldering, due to the material properties thereof, it is possible to form an electrical connection by thermal-bonding using a soldering material.

Additional aspects will be set forth in part in the description which follows and, in part, will be apparent from the description, or may be learned by practice of the presented embodiments of the present disclosure.

The embodiments may be realized by providing a battery pack including a battery cell; an electrode tab drawn out from the battery cell, for example in a first direction; a connection tab overlapping the electrode tab and bonded to the electrode tab; and a soldering material bonding the electrode tab and the connection tab to each other, wherein the connection tab includes a first metal material and the electrode tab includes a second metal material, the first metal material having an affinity to the soldering material that is different from an affinity of the second metal material to the soldering material, the soldering material forms a soldering bridge that has two ends respectively corresponding to a first thermal bonding point and a second thermal bonding point to a portion of the connection tab exposed by the electrode tab, and the soldering bridge connects the first and second thermal bonding points to each other and extends across a portion of the electrode tab between the first and second thermal bonding points.

In some embodiments, the soldering material forms a soldering bridge, which has two ends respectively corresponding to first and second thermal bonding points, to the connection tab exposed from the electrode tab, and the soldering bridge connects the first and second thermal bonding points to each other while surrounding a portion of the electrode tab between the first and second thermal bonding points across the portion of the electrode tab.

The affinity of the first metal material to the soldering material may be higher than the affinity of the second metal material to the soldering material.

The electrode tab may include openings therein, the openings being adjacent to each other, the first and second thermal bonding points may pass through the openings in the electrode tab, and the portion of the electrode tab may include a solid section between adjacent ones of the openings.

The electrode tab may include an opening therein, the first thermal bonding point may pass through the opening in the electrode tab, the second thermal bonding point may be outside of the electrode tab with respect to a contour line surrounding an outermost portion of the electrode tab, and the portion of the electrode tab may include a solid section between the opening in the electrode tab and the contour line of the electrode tab.

The electrode tab may include at least one opening through which the connection tab is exposed.

The electrode tab may include a plurality of openings spaced apart from each other, the soldering material may form a thermal bonding point with the connection tab at each of the plurality of openings and forms a plurality of soldering bridges continuously connected to each other, and each of the soldering bridges may connect the thermal bonding points, which are spaced apart from each other, to each other while crossing a solid section of the electrode tab formed between the openings adjacent to each other.

The electrode tab may include a plurality of openings arranged in a second direction crossing the first direction.

The plurality of openings may be in a plurality of columns arranged in the first direction, and the openings in each of the columns are arranged or aligned in the second direction.

The electrode tab may include a plurality of openings each having a constant unit shape that is repeated uniformly, i.e. a uniform unit shape.

The electrode tab may expose the connection tab outside of the electrode tab with respect to a contour line surrounding an outermost portion of the electrode tab.

The contour line defining the outside of the electrode tab exposing the connection tab may include an end line at an edge of the electrode tab in the first direction; and a pair of side lines respectively extending from two ends of the end line and facing each other.

The contour line of the electrode tab may include a region that is recessed inwardly toward an inside of the electrode tab.

The contour line of the electrode tab may include a pair of side lines that face each other and are recessed inwardly toward the inside of the electrode tab, and an end line having a straight shape and connecting ends of the side lines to each other.

For example, the contour line defining the outside of the electrode tab exposing the connection tab may include an end line configured to terminate the electrode tab in a first direction in which the electrode tab is drawn out from the battery cell and a pair of side lines respectively extending from two ends of the end line and facing each other.

For example, the contour line of the electrode tab may include a contour line that is recessed toward the inside of the electrode tab.

For example, the contour line of the electrode tab may include a pair of side lines facing each other and recessed toward the inside of the electrode tab and an end line having a straight line shape and connecting ends of the side lines to each other.

The electrode tab may include a plurality of openings each having a uniform circular unit shape inside the electrode tab; and a contour line recessed concavely toward the inside of the electrode tab, and the plurality of openings and the contour line recessed concavely inwardly may have a same curvature.

An interval or distance between the openings adjacent to each other inside the electrode tab may be equal to an interval or distance between the opening on the outermost side of the electrode tab and the contour line recessed inwardly, which are adjacent to each other.

The soldering material may form a soldering block that surrounds a stack of the electrode tab and the connection tab.

Inside the soldering block, a solid area of the electrode tab may be less than a solid area of the connection tab.

Inside the soldering block, an enclosed area of the electrode tab surrounded by a contour line on the outermost side of the electrode tab may be smaller than an enclosed area of the connection tab surrounded by a contour line on the outermost side of the connection tab.

The soldering block may have a sufficient thickness in a direction, in which the electrode tab and the connection tab are stacked, such that the soldering block surrounds the stack of the electrode tab and the connection tab so that the electrode tab and the connection tab are not exposed through the soldering block.

In the electrode tab and the connection tab stacked on each other a first portion of the soldering block, which is on the electrode tab, may be thermal-bonded with (regions of) the connection tab (that are) exposed via the electrode tab, and a second portion of the soldering block, which is on the connection tab, may be directly thermal-bonded with the connection tab without the electrode tab therebetween.

The electrode tab may expose a portion of the connection tab in the first portion of the soldering block, and the connection tab may not expose the electrode tab in the second portion of the soldering block.

An opening of the connection tab may be at a position spaced apart from (i.e. away from) the electrode tab outside the electrode tab so that the electrode tab is not exposed via the opening of the connection tab.

A thickness of the first portion of the soldering block may be greater than a thickness of the second portion of the soldering block in a direction in which the electrode tab and the connection tab are stacked.

At least some of the above and other features of the invention are set out in the claims.

### BRIEF DESCRIPTION OF THE DRAWINGS

Features will be apparent to those of skill in the art by describing in detail example embodiments with reference to the attached drawings in which :
FIG. 1 is a perspective view of a battery pack according to embodiments of the present disclosure;
FIG. 2 is an exploded perspective view of the battery pack of FIG. 1;
FIG. 3 is a perspective view schematically illustrating a soldering bridge that forms a bond between an electrode tab and a connection tab shown in FIG. 1;
FIG. 4 is a perspective view schematically illustrating another soldering bridge that forms the bond between the electrode tab and the connection tab shown in FIG. 1;
   and
FIGS. 5 to 8 are views schematically showing shapes of electrode tabs and soldering bridges which may be used in various embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the terms "or" and "and/or" are not exclusive terms, and include any and all combinations of one or more of the associated listed items. Expressions such as "at least one of," when preceding a list of elements, modify the entire list of elements and do not modify the individual elements of the list.

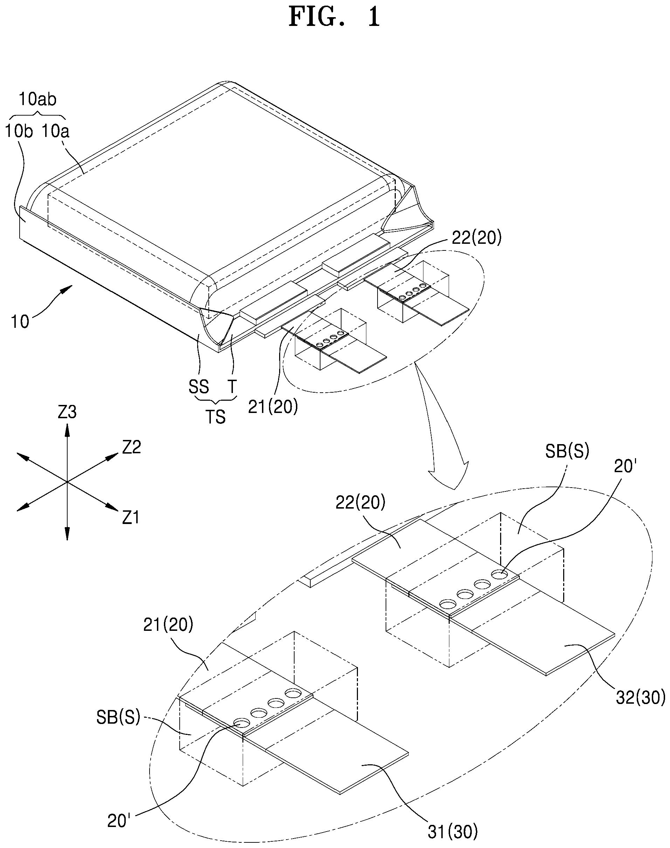

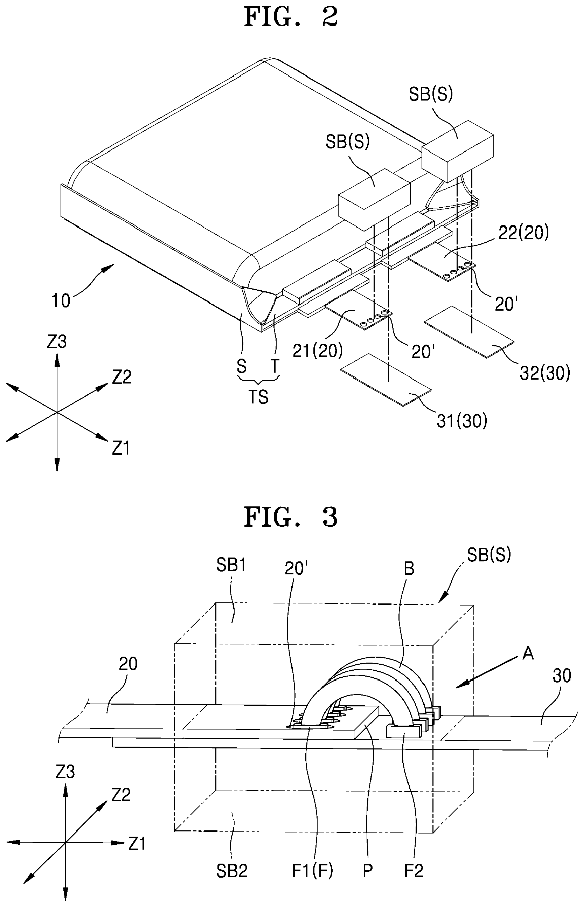

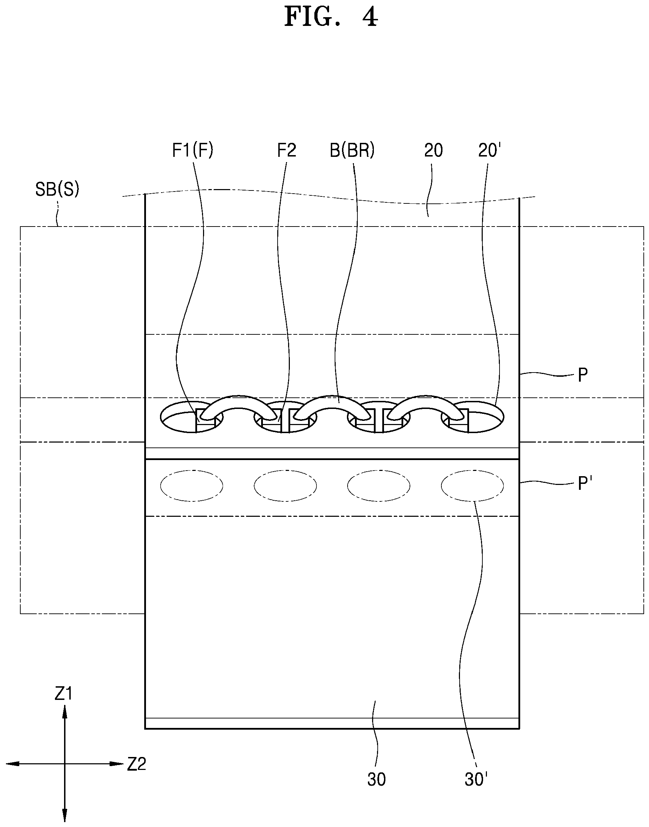

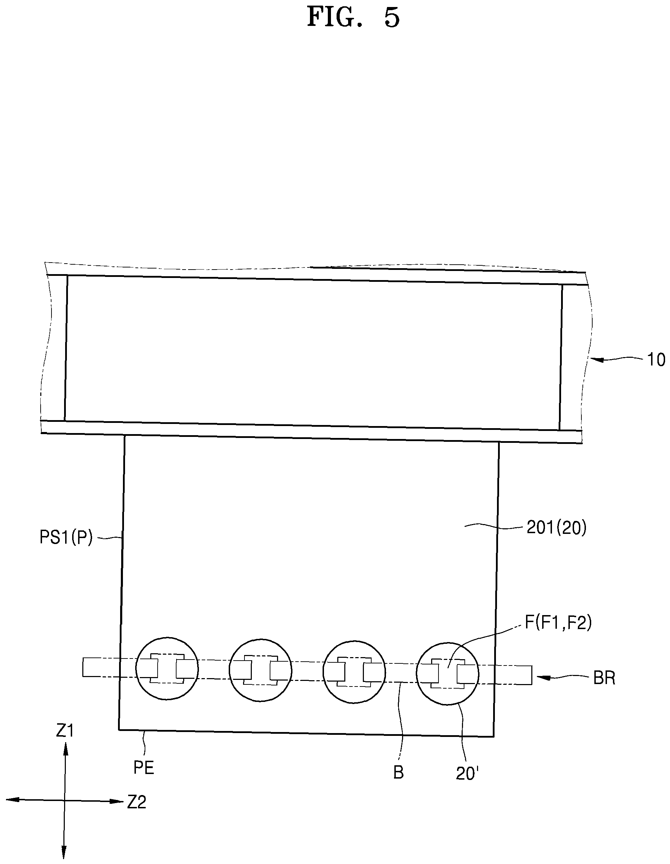

FIG. 1 is a perspective view of a battery pack 10 according to embodiments of the present disclosure. FIG. 2 is an exploded perspective view of the battery pack 10 of FIG. 1. FIG. 3 is a perspective view schematically illustrating a soldering bridge B that forms a bond between an electrode tab 20 and a connection tab 30 shown in FIG. 1. FIG. 4 is a perspective view schematically illustrating another soldering bridge B that forms the bond between the electrode tab 20 and the connection tab 30 shown in FIG. 1. FIGS. 5 to 8 are views schematically showing shapes of electrode tabs 20 and soldering bridges B which may be used in various embodiments of the present disclosure.

Referring to FIGS. 1 to 4, a battery pack 10 according to embodiments of the present disclosure may include a battery cell 10ab. The electrode tab 20 may be drawn out from (extend from) the battery cell 10ab, the connection tab 30 overlapping the electrode tab 20 and bonded to the electrode tab 20. A soldering material S bonds the electrode tab 20 and the connection tab 30 to each other. The connection tab 30 may include a first metal material, and the electrode tab 20 may include a second metal material. The first metal material may have an affinity to the soldering material S that is different from an affinity of the second metal material to the soldering material S. The soldering material S may form a soldering bridge B that has two ends respectively corresponding to first and second thermal bonding points F1 and F2 to the connection tab 30. In an implementation, the first thermal bonding point F1 may be exposed from or through the electrode tab 20. The soldering bridge B may connect the first and second thermal bonding points F1 and F2 to each other and may surround a portion of the electrode tab 20 between the first and second thermal bonding points F1 and F2 across the portion of the electrode tab 20.

Referring to FIG. 1, the battery cell 10ab may include an electrode assembly 10a and an exterior material 10b surrounding the electrode assembly 10a. In an implementation, the electrode assembly 10a may be formed in a winding-type in which first and second electrode plates and a separator between the first and second electrode plates are wound in the form of a roll or may be formed in a stack-type in which first and second electrode plates and a separator are stacked on each other. The first and second electrode plates of the electrode assembly 10a may be electrically connected to the outside of the exterior material 10b via the electrode tab 20, and the electrode tab 20 may include a first electrode tab 21 and a second electrode tab 22 that are electrically connected to the first and second electrode plates, respectively, of the electrode assembly 10a and thus may have different polarities.

In an implementation, the electrode tab 20 and the connection tab 30 may at least partially overlap and be bonded to each other, and the electrode tab 20 and the connection tab 30 may be electrically connected to each other to form a charging/discharging path of the battery cell 10ab. In an implementation, the electrode tab 20 may be pressed against the connection tab 30 by thermal-bonding between the soldering material S and the connection tab 30 and may be thus bonded to the connection tab 30. The electrode tab 20 may be electrically connected via the connection tab 30 to a circuit unit or load in front of the battery cell 10ab in a first direction Z 1.

The exterior material 10b may surround the electrode assembly 10a, and a sealing portion TS sealing the electrode assembly 10a may be formed by using an excess or excess portion of the exterior material 10b remaining after surrounding the electrode assembly 10a. In an implementation, the sealing portion TS may include a terrace T from which the electrode tab 20 is drawn out. In an implementation, the sealing portion TS may include a side sealing portion SS along the side of the battery cell 10ab, in addition to the terrace T.

In an implementation, the electrode tab 20 may be drawn out from the battery cell 10ab in the first direction Z1 and may include the first and second electrode tabs 21 and 22 having different polarities. In an implementation, the first and second electrode tabs 21 and 22 having different polarities may be arranged (e.g., spaced apart) in a second direction Z2 crossing the first direction Z1.

Throughout this specification, the first and second directions Z1 and Z2 may be defined on a plane on which the battery cell 10ab is arranged. The first direction Z1 may refer to a direction in which the electrode tab 20 is drawn out from the terrace T of the battery cell 10ab, and the second direction Z2 may refer to a direction crossing the first direction Z1, e.g., a direction in which the first and second electrode tabs 21 and 22 having different polarities are spaced apart. In an implementation, the first and second directions Z1 and Z2 may refer to directions crossing each other perpendicularly. Also, throughout this specification, the third direction Z3 may refer to a direction crossing both the first and second directions Z1 and Z2 in which the battery cell 10ab is arranged. As described below, the third direction Z3 may correspond to a thickness direction of the electrode tab 20, a thickness direction of the connection tab 30, a stacking direction of the electrode tab 20 and the connection tab 30, and a thickness direction of a soldering block SB that surrounds the electrode tab 20 and the connection tab 30 stacked on each other.

In an implementation, the first and second electrode tabs 21 and 22 may include metal materials having excellent affinity with the first and second electrode plates, by taking into consideration the bonding strength with the first and second electrode plates of the electrode assembly 10a. In an implementation, the first and second electrode tabs 21 and 22 may respectively include aluminum, and copper or nickel, by taking into consideration the affinity with the first and second electrode plates respectively including aluminum and copper. In an implementation, at least one electrode tab 20 among the first and second electrode tabs 21 and 22, e.g., the first electrode tab 21, may include a second metal material having poor or low affinity with the soldering material S. Throughout this specification, the fact that a material has poor or low affinity with the soldering material S may indicate that the material is unsuitable for forming direct thermal-bonding with the soldering material S because at least the coupling strength therebetween is weak to form the direct thermal-bonding with the soldering material S. In an implementation, the fact that a material has excellent affinity with the soldering material S may indicate that the material forms direct thermal-bonding with the soldering material S to provide sufficient coupling strength. In an implementation, the first electrode tab 21 may include the second metal material having poor affinity with the soldering material S, e.g., aluminum or an aluminum alloy material. The electrode tab 20 (e.g., the first electrode tab 21) having poor affinity with the soldering material S may be inappropriate to provide sufficient bonding strength with the connection tab 30 by direct thermal-bonding with the soldering material S, e.g., by soldering operation. In an implementation e, the electrode tab 20 and the connection tab 30 may be bonded to each other by pressing the electrode tab 20 against the connection tab 30 through thermal-bonding between the connection tab 30 and the soldering material S, rather than electrically connecting the electrode tab 20 and the connection tab 30 to each other using direct thermal-bonding between the electrode tab 20 (the first electrode tab 21) and the soldering material S. In an implementation, the connection tab 30 may include a first metal material having excellent affinity with the soldering material S. In an implementation, the connection tab 30 may include a nickel material or a nickel alloy material. In an implementation, the connection tab 30 connected to the electrode tab 20 may include first and second connection tabs 31 and 32 of different polarities, which are electrically connected to the first and second electrode tabs 21 and 22 of different polarities, respectively. The first and second connection tabs 31 and 32 may include the same material, e.g., a nickel material or a nickel alloy material having excellent affinity with the soldering material S.

In an implementation, among the electrical connection between the first electrode tab 21 and the first connection tab 31 and the electrical connection between the second electrode tab 22 and the second connection tab 32, the electrical connection between at least one electrode tab 20 and the connection tab 30 may be established by a method of bonding the electrode tab 20 to the connection tab 30 through thermal-bonding between the soldering material S and the connection tab 30. In an implementation, for the electrical connection of the first electrode tab 21 (that has relatively poor affinity with the soldering material S among the first and second electrode tabs 21 and 22 and is thus unsuitable for forming direct thermal-bonding with the soldering material S), e.g., for the electrical connection between the first electrode tab 21 and the first connection tab 31, the above-described thermal-bonding between the first connection tab 31 and the soldering material S may be used to bond the first electrode tab 21 and the first connection tab 31 to each other. In an implementation, the bonding between the connection tab 30 and the electrode tab 20 through thermal-bonding between the connection tab 30 and the soldering material S as described above may be commonly used in the electrical connection between the second connection tab 32 and the second electrode tab 22 that may have excellent affinity with the soldering material S and may be thermal-bonded with the soldering material S, as well as in the electrical connection between the first connection tab 31 and the first electrode tab 21 that has relatively poor affinity with the soldering material S. Therefore, throughout this specification, the electrical connection between the electrode tab 20 and the connection tab 30 may be applied to at least one of the connection between the first electrode tab 21 and the first connection tab 31 and the connection between the second electrode tab 22 and the second connection tab 32. In an implementation, the above technical feature may be commonly applied to both the connection between the first electrode tab 21 and the first connection tab 31 and the connection between the second electrode tab 22 and the second connection tab 32. In an implementation, the thermal-bonding may be performed differently depending on the affinity with the soldering material S. For the first electrode tab 21 having relatively poor affinity, the first electrode tab 21 and the first connection tab 31 may be bonded to each other by the thermal-bonding between the first connection tab 31 and the soldering material S, rather than by the direct thermal-bonding between the first electrode tab 21 and the soldering material S. In an implementation, for the second electrode tab 22 having relatively excellent affinity, the second electrode tab 22 and the second connection tab 32 may be bonded to each other by the direct thermal-bonding between the second electrode tab 22 and the soldering material S.

Referring to FIGS. 3 and 4, in embodiments of the present disclosure, the soldering material S and the connection tab 30, which have excellent material affinity to each other, may form direct coupling (thermal-bonding) to each other while forming a thermal bonding point F. The electrode tab 20 may be bonded to the connection tab 30 while being pressed between the soldering material S and the connection tab 30 according to the coupling force between the soldering material S and the connection tab 30.

In an implementation, the electrode tab 20 may be between the connection tab 30 and the soldering material S and may be on the connection tab 30 to overlap the connection tab 30. In an implementation, the electrode tab 20 may be between the connection tab 30 and the soldering material S that form direct thermal-bonding to each other and may be pressed between the connection tab 30 and the soldering material S according to the coupling force therebetween. In an implementation, in order to form direct coupling between the connection tab 30 and the soldering material S, the connection tab 30 and the soldering material S on opposite sides of the electrode tab 20 may be exposed to each other. In an implementation, the direct coupling between the connection tab 30 and the soldering material S may be made at a position outside the electrode tab 20, e.g., at a position outside the solid section of the electrode tab 20. As described below, the electrode tab 20 may form the direct coupling between the connection tab 30 and the soldering material S on opposite sides of the electrode tab 20 via openings 20' in the electrode tab 20. In an implementation, the electrode tab 20 may form the direct coupling between the connection tab 30 and the soldering material S on opposite sides of the electrode tab 20 via the outside of the electrode tab 20 (the outside of the electrode tab 20 away from a contour line P surrounding the outermost portion of the electrode tab 20, e.g., a perimeter of the electrode tab 20). Therefore, the positions avoiding the electrode tab 20 to allow direct coupling between the connection tab 30 and the soldering material S formed on opposite sides of the electrode tab 20 may be outside the electrode tab 20 (outside, away from or relative to the contour line P of the electrode tab 20) or inside the electrode tab 20 (inside, surrounded by or relative to the contour line P of the electrode tab 20). In an implementation, the contour line P is formed or may trace along the outermost portion or edges of the electrode tab 20, and the outside of the electrode tab 20 and the inside of the electrode tab 20 may be distinguished from each other with the contour line P as a boundary.

In an implementation, the bonding state between the electrode tab 20 and the connection tab 30 may affect electric resistance on the charging/discharging path of the battery cell 10ab that includes the electrode tab 20 and the connection tab 30. Therefore, it may be desirable to maintain appropriate bonding state between the electrode tab 20 and the connection tab 30 to ensure close contact between the electrode tab 20 and the connection tab 30. Also, it may be desirable to uniformly maintain an appropriate bonding state across electrically conductive areas between the electrode tab 20 and the connection tab 30, e.g., the areas in which the electrode tab 20 and the connection tab 30 overlap each other. In an implementation, if the electrode tab 20 and the connection tab 30 were to be detached from each other in some places of the overlapping areas between the electrode tab 20 and the connection tab 30, a poor bonding state between the electrode tab 20 and the connection tab 30 could cause an increase in electric resistance between the electrode tab 20 and the connection tab 30.

In an implementation, the electrode tab 20 and the connection tab 30 may be pressed against each other uniformly so that appropriate bonding state may be uniformly maintained between the electrode tab 20 and the connection tab 30. In an implementation, the thermal-bonding (corresponding to the thermal bonding point F) between the connection tab 30 and the soldering material S may be uniformly formed throughout the inside and outside of the electrode tab 20. In an implementation, a plurality of thermal bonding (thermal bonding points F) may be on the inside and outside of the electrode tab 20 via the openings 20' in the electrode tab 20 and via the outside of the electrode tab 20.

In an implementation, the connection tab 30 and the soldering material S may be thermal-bonded to each other with the electrode tab 20 therebetween via the thermal bonding points F at a plurality of locations inside and outside the electrode tab 20. The connection tab 30 and the soldering material S thermal-bonded to each other may press the electrode tab 20 therebetween to bond the electrode tab 20 and the connection tab 30 to each other. The bonding between the electrode tab 20 and the connection tab 30 may be understood as that the electrode tab 20 is pressed against the connection tab 30 by the soldering bridge B that connects the first and second thermal bonding points F1 and F2 with solid sections of the electrode tab 20 therebetween through the thermal bonding points F at a plurality of locations. In an implementation, the soldering bridge B connecting the first and second thermal bonding points F1 and F2 may be formed between adjacent first and second thermal bonding points F1 and F2 in adjacent openings 20' in the electrode tab 20 as shown in FIG. 4 or between a first thermal bonding point F1 in an opening 20' in the electrode tab 20 and a second thermal bonding point F2 adjacent to the first thermal bonding point F1 and outside of the electrode tab 20 as shown in FIG. 3. The soldering bridge B connecting the first and second thermal bonding points F1 and F2 to each other with the first and second thermal bonding points F1 and F2 as two ends may extend across solid sections of the electrode tab 20, e.g., as if surrounding the solid sections of the electrode tab 20 therebetween, and may press the solid sections of the electrode tab 20 between the first and second thermal bonding points F1 and F2 toward the connection tab 30 in a coupling direction formed by the first and second thermal bonding points F1 and F2.

In an implementation, in order to provide the bonding strength of an appropriate level or higher between the electrode tab 20 and the connection tab 30 and the uniform bonding strength across electrically conductive areas between the electrode tab 20 and the connection tab 30, a plurality of soldering bridges B bonding the plurality of solid sections of the electrode tab 20 may be at different locations by using the soldering material S applied on the electrode tab 20.

In an implementation, the soldering material S may be applied on the electrode tab 20 in a molten or semi-molten state to have appropriate fluidity. The soldering material S may permeate a low level out of the solid sections of the electrode tab 20 in a depth direction as a thickness direction (third direction Z3) of the electrode tab 20 and may be then thermal-bonded with the connection tab 30 while forming the thermal-bonding (thermal bonding points F). The soldering material S may fill low levels adjacent to each other (e.g., in the openings 20' adjacent to each other or the outside of the openings 20' adjacent to the electrode tab 20). The soldering bridge B connecting the adjacent thermal bonding points F may be formed by surplus soldering material S that is raised to a high level (e.g., the solid section of the electrode tab 20) between the adjacent low levels. In an implementation, the soldering material S having fluidity in a molten state or a semi-molten state may permeate the electrode tab 20 in the thickness direction (third direction Z3) of the electrode tab 20 as a depth direction. The soldering material S may first fill the low levels (e.g., may fill the openings 20' inside the electrode tab 20 or may fill around the outside of the electrode tab 20) from which the electrode tab 20 is excluded. In an implementation, the excess soldering material S may rise from the low level to the high level (e.g., onto solid sections of the electrode tab 20), and the soldering material S may form a shape complementary to that of the electrode tab 20. In an implementation, the soldering material S may be applied on the electrode tab 20 to cover the electrode tab 20 and may be applied in an amount sufficient to cover the thickness of the electrode tab 20. In an implementation, the electrode tab 20 may not be exposed through the outer surface of the soldering block SB formed by applying the soldering material S. In an implementation, the outer surface of the soldering block SB (through which the electrode tab 20 is not exposed) may refer to the outer surface of the soldering block SB in the direction in which the soldering material S is applied or the thickness direction of the electrode tab 20 (third direction Z3).

In an implementation, the soldering material S having fluidity in a molten state or a semi-molten state may fill the openings 20' at the low level in the electrode tab 20 and may be thermal-bonded with the portion of connection tab 30 exposed via the openings 20'. In an implementation, the soldering material S may be thermal-bonded with the connection tab 30 exposed through or around the outside of the electrode tab 20 at the low level outside the electrode tab 20. The soldering material S permeating the low level may form the first and second thermal bonding points F1 and F2 with the connection tab 30, and the surplus soldering material S remaining after filling the low level may form the soldering bridge B that connects the first and second thermal bonding points F1 and F2 and covers the solid sections of the electrode tab 20 at the high level. In an implementation, the soldering bridge B attached to the connection tab 30 through or at the first and second thermal bonding points F1 and F2 (according to curing of the soldering material S at room temperature) may have two ends of the first and second thermal bonding points F1 and F2 and may extend across the solid section of the electrode tab 20 as if surrounding the solid section of the electrode tab 20 between the first and second thermal bonding points F1 and F2. The soldering bridge B may press the solid section of the electrode tab 20 between the first and second thermal bonding points F1 and F2 against the connection tab 30 in a coupling direction formed by the first and second thermal bonding points F1 and F2 (e.g., such that the electrode tab 20 may be held in close contact with the connection tab 30 by the solidified soldering material S to thereby maintain a good electrical connection between the electrode tab 20 and the connection tab 30).

In an implementation, the thickness of the soldering block SB may depend on the coating thickness of the soldering material S, and the soldering block SB may have a thickness sufficient to surround the electrode tab 20 and the connection tab 30 in a stacking direction (third direction Z3) in which the electrode tab 20 and the connection tab 30 overlap each other. In an implementation, the soldering block SB may have a sufficient thickness on both sides to cover the upper surface of the electrode tab 20 and the lower surface of the connection tab 30 in the stacking direction (third direction Z3). In an implementation, the soldering block SB may completely surround or cover the thicknesses of the electrode tab 20 and the connection tab 30 in the stacking direction (third direction Z3) of the electrode tab 20 and the connection tab 30. In an implementation, the electrode tab 20 may not be exposed through the upper surface of the soldering block SB, and the connection tab 30 may not be exposed through the lower surface of the soldering block SB.

In an implementation, the soldering block SB may surround the electrode tab 20 and the connection tab 30 on both sides in the stacking direction (third direction Z3) of the electrode tab 20 and the connection tab 30, the connection tab 30 and the soldering material S on opposite sides of the electrode tab 20 may be thermal-bonded to each other with the electrode tab 20 therebetween, and the electrode tab 20 may be pressed between the connection tab 30 and the soldering material S which are thermal-bonded to each other. Therefore, the soldering material S (corresponding to a first portion SB1 of the soldering block SB) that substantially contributes to bonding the electrode tab 20 and the connection tab 30 to each other may form the first portion SB1 of the soldering block SB on one side of the electrode tab 20 (e.g., the opposite side from the connection tab 30 in the stacking direction (third direction Z3)). In an implementation, the soldering block SB may surround the electrode tab 20 and the connection tab 30 on both sides in the stacking direction (third direction Z3) of the electrode tab 20 and the connection tab 30, and the thickness of the first portion SB1 of the soldering block SB on one side of the electrode tab 20 on the opposite side from the connection tab 30 corresponding to the soldering material S contributing to bonding the electrode tab 20 and the connection tab 30 may be greater than the thickness of a second portion SB2 of the soldering block SB on another side of the electrode tab 20 that is the same side as the connection tab 30. In an implementation, the soldering block SB may be on all of the one surface and another surface of the connection tab 30, and the thickness of the first portion SB1 of the soldering block SB on one surface of the connection tab 30 may be greater than the thickness of the second portion SB2 of the soldering block SB on the other surface of the connection tab 30. In an implementation, the soldering block SB may be on both surfaces of the connection tab 30, and thus, it is possible to increase the coupling force by increasing coupling areas for thermal-bonding between the connection tab 30 and the soldering material S of the soldering block SB. In an implementation, the electrode tab 20 between the soldering material S and the connection tab 30 may be firmly pressed by reinforced thermal-bonding between the soldering material S and the connection tab 30, and thus, it is possible to strengthen the bonding between the connection tab 30 and the electrode tab 20. In an implementation, the soldering material S may be on both surfaces of the connection tab 30. In an implementation, the soldering material S formed on one surface of the connection tab 30 may be thermal-bonded to the one surface of the connection tab 30 with the electrode tab 20 therebetween, and may directly press the electrode tab 20. In an implementation, the thickness of the first portion SB1 of the soldering block SB (corresponding to the soldering material S on the one surface of the connection tab 30) may be greater than the thickness of the second portion SB2 of the soldering block SB (corresponding to the soldering material S that increases the coupling area for the thermal-bonding with the connection tab 30 without the electrode tab 20 therebetween).

In an implementation, the opening 20' in the electrode tab 20 may facilitate formation of the thermal-bonding between the soldering material S and the connection tab 30 on opposite sides of the electrode tab 20, and the opening 20' may not correspond to a structure that increases the coupling area between the electrode tab 20 and the soldering material S. In an implementation, the electrode tab 20 may include the second metal material having relatively poor affinity with the soldering material S, and thus, the electrode tab 20 may not substantially form thermal-bonding with the soldering material S. In an implementation, the connection tab 30 may include the first metal material having relatively excellent affinity with the soldering material S. In an implementation, the electrode tab 20 between the connection tab 30 and the soldering material S may be pressed against the connection tab 30 by the thermal-bonding between the connection tab 30 and the soldering material S or by the thermal-bonding therebetween via the opening 20' of the electrode tab 20, rather than bonding the electrode tab 20 and the connection tab 30 to each other by the thermal-bonding of the electrode tab 20 itself with the soldering material S. In an implementation, the opening 20' in the electrode tab 20 may contribute to bonding the electrode tab 20 and the connection tab 30 to each other by substantially allowing the thermal-bonding to be formed via the opening 20' between the soldering material S and the connection tab 30 (e.g., such that the electrode tab 20 is pressed tightly against the connection tab 30), rather than contributing to bonding the electrode tab 20 and the connection tab 30 to each other by increasing the coupling area between the electrode tab 20 and the soldering material S via the opening 20'.

In an implementation, in the stack structure of the electrode tab 20 and the connection tab 30, the opening 20' may be at a position on the electrode tab 20 that exposes the connection tab 30, and may not be at a position on the connection tab 30 that exposes the electrode tab 20. In an implementation, in the electrode tab 20 and the connection tab 30 stacked on each other, the electrode tab 20 may expose a portion of the connection tab 30 to the first portion SB1 of the soldering block SB, and the connection tab 30 may not expose a portion of the electrode tab 20 to the second portion SB2 of the soldering block SB. In an implementation, an opening 30' (see FIG. 4) may also be in the connection tab 30, and may not be at a position on the connection tab 30 exposing the electrode tab 20. In an implementation, the electrode tab 20 may include the second metal material having relatively poor affinity with the soldering material S. If a portion of the electrode tab 20 were to be exposed via the opening 30' of the connection tab 30, it could be difficult for the exposed portion of the electrode tab 20 to form appropriate thermal-bonding with the soldering material S. In an implementation, the opening 30' (see FIG. 4) may also be formed in the connection tab 30. The opening 30' may be outside the electrode tab 20, e.g., away or spaced apart from the electrode tab 20, and not at a position exposing or overlapping the electrode tab 20, and may help increase the coupling area between the connection tab 30 and the soldering material S, which are thermal-bonded to each other. In an implementation, the coupling force between the connection tab 30 and the soldering material S may be strengthened, and the electrode tab 20 between the connection tab 30 and the soldering material S may be pressed to thereby strengthen the bonding with the connection tab 30.

In an implementation, in the stack structure of the electrode tab 20 and the connection tab 30 in or surrounded by the soldering block SB, the solid area of the electrode tab 20 may be relatively less than the solid area of the connection tab 30. In an implementation, it is possible to increase the coupling area, in which the thermal-bonding between the connection tab 30 and the soldering material S is formed, at a position avoiding or around the electrode tab 20 and on the connection tab 30, e.g., at the opening 20' in the electrode tab 20 and at a position outside or around the electrode tab 20. In an implementation, the solid areas of the electrode tab 20 and the connection tab 30 in the soldering block SB may refer to areas (e.g., volumes) occupied by the solid sections of the electrode tab 20 and the connection tab 30 and excluding the openings 20' and 30' respectively in the electrode tab 20 and the connection tab 30 (see FIG. 4).

In an implementation, in the stack structure of the electrode tab 20 and the connection tab 30 in or surrounded by the soldering block SB, the enclosed area surrounded by a contour line P of the electrode tab 20, which is the area including the solid section of the electrode tab 20 and the opening 20', may less than the enclosed area surrounded by a contour line P' (see FIG. 4) of the connection tab 30, which is the area including the solid section of the connection tab 30 and the opening 30' (see FIG. 4). Through the area away from the electrode tab 20 and corresponding to the inside of the connection tab 30, it is possible to increase the coupling area for the thermal-bonding between the connection tab 30 and the soldering material S formed on opposite sides of the electrode tab 20.

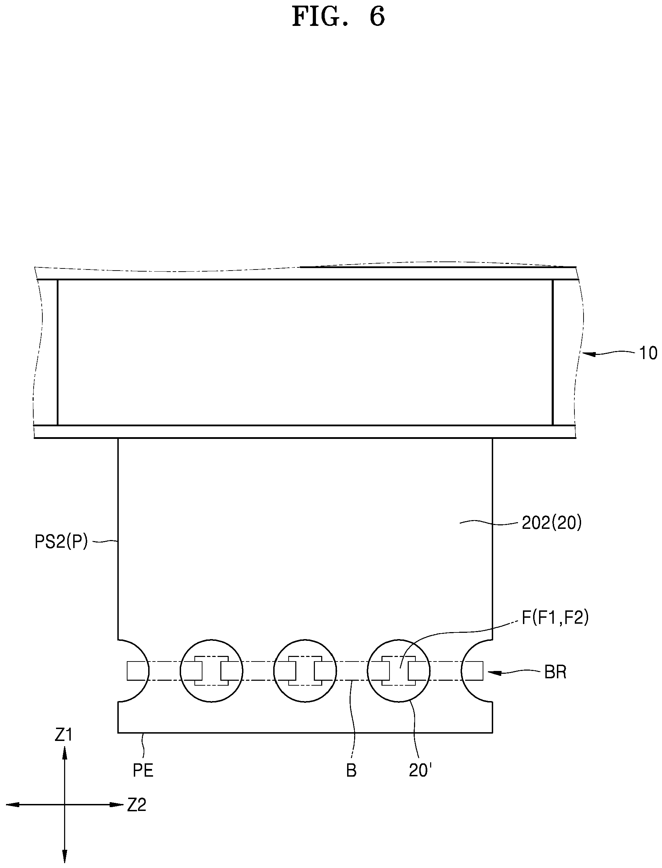

Referring to FIGS. 5 and 6, an electrode tab 20 may include a plurality of openings 20' spaced apart from each other. In an implementation, the plurality of openings 20' may be in a pattern in which a constant unit shape is repeated uniformly in or along a second direction Z2 crossing a first direction Z1 (in which the electrode tab 20 extends). In an implementation, the unit shape may be repeated at uniform intervals in the second direction Z2. Through the arrangement of uniformly repeated openings 20' of the constant unit shape, it is possible to uniformly maintain the coupling force for the thermal-bonding between the connection tab 30 the soldering material S, which may be formed through the array of openings 20'. Through uniform bonding strength that does not depend on the position between the electrode tab 20 and the connection tab 30, it is possible to reduce the electric resistance of the charging/discharging path including the electrode tab 20 and the connection tab 30. In an implementation, it is possible to help prevent an increase in electric resistance on the charging/discharging path that could otherwise occur due to a local increase in resistance or a decrease in a substantial electrically conductive area.

In an implementation, a solid section of the electrode tab 20 may be between adjacent openings 20' arranged in the second direction Z2, and the openings 20' and the solid sections of the electrode tab 20 may be alternately arranged in the second direction Z2 (e.g., along a straight line extending in the second direction Z2). In an implementation, the array of openings 20' in the second direction Z2 may be used to form soldering bridges B. Each of the soldering bridges B may have two ends corresponding to first and second thermal bonding points F1 and F2 formed through or in adjacent openings 20' and may extend across or over the solid section of the electrode tab 20 between the first and second thermal bonding points F1 and F2. In an implementation, an array BR of a plurality of soldering bridges B continuously connected in the second direction Z2 may be formed. In the array BR of the soldering bridges B, a thermal bonding point F to be thermal-bonded to the connection tab 30 may be in each of the openings 20'. In an implementation, the soldering bridge B may extend across or over the solid section of the electrode tab 20 between the openings 20' that are adjacent to each other, and the plurality of soldering bridges B may be continuously connected to each other while connecting the thermal bonding points F spaced apart from each other in the second direction Z2. The solid sections of the electrode tab 20 between the thermal bonding points F may be pressed against the connection tab 30 in the coupling direction, and thus, the electrode tab 20 may be bonded to the connection tab 30.

In an implementation, as illustrated in the drawings, the soldering bridge B may extend in the form of a single strand between the first and second thermal bonding points F1 and F2, e.g., may have two ends corresponding to the first and second thermal bonding points F1 and F2 in openings 20' adjacent to each other in the electrode tab 20. In an implementation, the soldering bridge B may extend in the form of a single strand between the first and second thermal bonding points F1 and F2 while having two ends corresponding to the first and second thermal bonding points F1 and F2, e.g., one of which is in the opening 20' in the electrode tab 20 and the other of which is outside the electrode tab 20. In an implementation, to the extent that the soldering bridge B connects the first and second thermal bonding points F1 and F2 at different positions on the connection tab 30 exposed via the electrode tab 20, the soldering bridge B may not only be a single strand extending between the first and second thermal bonding points F1 and F2, but may be formed in a block shape having the thickness of a thick film and connecting the first and second thermal bonding points F1 and F2 to each other. In an implementation, the soldering bridge B may be a portion of the soldering block SB that is between different first and second thermal bonding points F1 and F2. These various types of soldering bridges B may surround the solid sections of the electrode tab 20 between the first and second thermal bonding points F1 and F2 and may connect the first and second thermal bonding points F1 and F2 at different positions to each other. In an implementation, the solid sections of the electrode tab 20 may be pressed against the connection tab 30 in the coupling direction (formed by the first and second thermal bonding points F1 and F2), and the electrode tab 20 and the connection tab 30 may be bonded to each other.

In an implementation, the position avoiding the electrode tab 20 (the solid section of the electrode tab 20) or the position outside the electrode tab 20 but inside the connection tab 30 may correspond to places where the thermal-bonding is formed between the connection tab 30 and the soldering material S on opposite sides of the electrode tabs 20 or may correspond to the opening 20' inside the electrode tab 20 and the position outside the electrode tab 20. In an implementation, as shown in FIG. 5, openings 20' in the electrode tab 20 may include openings 20' isolated from the outside of the electrode tab 20 at positions spaced inwardly apart from a contour line P (e.g., outer perimeter) of the electrode tab 20. In an implementation, as shown in FIG. 5, the outside of the electrode tab 20 may refer to the outside of the electrode tab 20 along the contour line P that follows the outer boundary surrounding the electrode tab 20, and the contour line P of the electrode tab 20 may extend along a straight line on three different sides except for one side connected to the electrode assembly 10a. The thermal-bonding between the connection tab 30 and the soldering material S may be formed through the outside of contour lines P (an end line PE and a pair of side lines PS1) connected to each other. In an implementation, the contour line P of the electrode tab 20 may include the end line PE at the terminal end of the electrode tab 20 in the first direction Z1 and the pair of side lines PS1 respectively extending (e.g., straight back toward the electrode assembly 10a) from two ends of the end line PE to face or be parallel with each other.

In an implementation, as shown in FIG. 6, a contour line P distinguishing the inside and outside of an electrode tab 20 from each other may include contour lines P that are connected to each other along three different sides except for one side connected to an electrode assembly 10a. In an implementation, the contour line P may include a pair of side lines PS2 facing each other (and including a portion that is recessed inwardly) and an end line PE on a straight line connecting ends of the side lines PS2.

In an implementation, as illustrated in FIG. 6, unlike embodiments shown in FIG. 5, the contour line P (e.g., the side lines PS2) may include a portion that is concavely recessed, and thus, it is possible to form the thermal-bonding between the connection tab 30 and the soldering material S through or at the outside of the contour line P (e.g., the side lines PS2) at the portion that is recessed inwardly. The contour line P (e.g., the side lines PS2) may include the portion that is recessed inwardly, and the thermal-bonding between the connection tab 30 and the soldering material S may be at positions in close contact with the electrode tab 20. In an implementation, it is possible to further strengthen the bonding between the electrode tab 20 and the connection tab 30. In an implementation, the thermal-bonding between the connection tab 30 and the soldering material S may be at the position in close contact with the electrode tab 20 through the contour line P (e.g., the side lines PS2) recessed inwardly may indicate that the first and second thermal bonding points F1 and F2 between the connection tab 30 and the soldering material S are defined as two ends, and the second thermal bonding point F2 may be outside the contour line P (e.g., the side lines PS2) that is recessed inwardly toward the opening 20' of the electrode tab 20 forming the first thermal bonding point F1. In an implementation, it is possible to maintain a narrow distance between the first and second thermal bonding points F1 and F2, and it is also possible to equally maintain the distance between the first and second thermal bonding points F1 and F2 over the entire width of the electrode tab 20 in the second direction Z2.

In an implementation, as shown in FIG. 6, the openings 20' forming the first and second thermal bonding points F1 and F2 or the contour line P (e.g., the side lines PS2) that is recessed inward may be formed by repeating substantially the same unit shape. In an implementation, a circular unit shape may be repeated inside and outside of the electrode tab 20 in the second direction Z2. In an implementation, the opening 20' having a complete unit shape may be inside the electrode tab 20, and the contour line P (e.g., the side lines PS2), in which a portion of the unit shape is cut and recessed inwardly, may be on or form the outside of the electrode tab 20. In an implementation, the openings 20' in the form of a complete circle and the contour line P (e.g., the side lines PS2) in the form of a semicircle partially cut and recessed inwardly, which may be formed according to repetition of circular unit shapes throughout the inside and outside of the electrode tab 20, may have the same curvature or same radius of curvature. In an implementation, the opening 20' may have a circular shape, and the portion of the contour line P (e.g., the side lines PS2) that is recessed inward may have a semicircular shape.

In an implementation, substantially the same unit shape may be repeatedly arranged at uniform intervals in the second direction Z2. In an implementation, as illustrated in FIG. 5, the plurality of openings 20' may be inside the electrode tab 20 and repeated at uniform intervals in the second direction Z2. In an implementation, as illustrated in FIG. 6, the portion of the contour line P (e.g., the side lines PS2) may be recessed inwardly, as well as the plurality of openings 20' within the electrode tab 20 and repeated at uniform intervals in the second direction Z2. The interval between the openings 20' adjacent to each other within the electrode tab 20 and the interval between the opening 20' at the outermost side and the portion of the contour line P (the side lines PS2) that is recessed inwardly and adjacent to the opening 20' at the outermost side may be equal to each other. In an implementation, the intervals maintained between the openings 20' of the electrode tab 20 and adjacent to each other or between the opening 20' at the outermost side of the electrode tab 20 and the portion of the contour line P (the side lines PS2) recessed inward may respectively refer to the width of the solid section of the electrode tab 20 between the openings 20' adjacent to each other or the width of the solid section of the electrode tab 20 between the outermost opening 20' and the inwardly recessed portion of the contour line P (the side lines PS2). In an implementation, the solid section of the electrode tab 20 may be pressed against the connection tab 30 by the soldering material S between the first and second thermal bonding points F1 and F2 formed by the soldering material S and the connection tab 30, and the solid sections thereof may be formed at constant intervals. In an implementation, it is possible to form or provide uniform bonding between the electrode tab 20 and the connection tab 30 and reduce the electric resistance on the charging/discharging path of the battery cell 10ab including the electrode tab 20 and the connection tab 30.

In an implementation, as shown in FIG. 5, the opening 20' within the electrode tab 20 may limit the size of the thermal bonding point F formed via the opening 20' between the connection tab 30 and the soldering material S. In an implementation, as shown in FIG. 6, the contour line P (the side lines PS2) recessed inwardly may not limit the size of the thermal bonding point F formed outside of the contour line P between the connection tab 30 and the soldering material S. In an implementation, as shown in FIG. 6, the contour line P (the side lines PS2) may be recessed inwardly on both sides of the electrode tab 20 in the second direction Z2, and thus, it is possible to relatively increase the size of the thermal bonding point F between the connection tab 30 and the soldering material S at both sides of the electrode tab 20 in the second direction Z2. Along the entire contour line P that includes the contour line P (the end line PE) at the end of the electrode tab 20 in the first direction Z1 as well as the contour line P (the side lines PS2) formed in pairs recessed inwardly and facing each other on both sides of the electrode tab 20 in the second direction Z2, it is possible to form the thermal bonding point F between the connection tab 30 and the soldering material S at the outside of the contour line P, which does not artificially limit the size of the thermal bonding point F. Therefore, it is possible to increase the size of the thermal bonding point F between the connection tab 30 and the soldering material S along the contour line P of the electrode tab 20. In an implementation, the bonding strength between the connection tab 30 and the soldering material S, which is outside the contour line P that does not limit the size of the thermal bonding point F outside the electrode tab 20, may relatively further strengthen the bonding strength between the connection tab 30 and the soldering material S, which is formed inside the electrode tab 20 and passes through the opening 20' that limits the size of the thermal bonding point F.

In an implementation, the electrode tab 20 may be formed by cutting a metal base material having a large area into individual units for the size of the electrode tab 20. The contour line P of the electrode tab 20 may be formed through the cutting of the electrode tab 20, and a burr, deformation, or the like could be formed or caused by the cutting along the contour line P of the electrode tab 20. In an implementation, in the electrode tab 20 that forms face-to-face contact with the connection tab 30 on a plane defined by the first and second directions Z1 and Z2, the contour line P, which is recessed into the electrode tab 20 and does not relatively limit the size of the thermal bonding point F, may be formed along the contour line P of the electrode tab 20 having a cut surface that may deviate from the plane defined by the first and second directions Z1 and Z2, in order to strengthen the face-to-face contact or bonding with the connection tab 30.

In an implementation, in the stack structure of the electrode tab 20 and the connection tab 30 in the soldering block SB, comparing the solid area occupied by the solid section of the electrode tab 20 with the solid area occupied by the solid section of the connection tab 30, the solid area of the connection tab 30 may be greater than the solid area of the electrode tab 20. In an implementation, comparing the enclosed area of the electrode tab 20 surrounded by the contour line P with the enclosed area of the connection tab 30, the enclosed area of the connection tab 30 may be relatively greater than the enclosed area of the electrode tab 20. In an implementation, in the stack structure of the electrode tab 20 and the connection tab 30 in the soldering block SB, the connection tab 30 may have a relatively larger area. In an implementation, the thermal-bonding between the connection tab 30 and the soldering material S on opposite sides of the electrode tab 20 may be formed through the area of the connection tab 30 away from the electrode tab 20. In an implementation, the thermal bonding point F, of which size is not artificially limited, may be between the connection tab 30 and the soldering material S on the outside of the electrode tab 20 away from the electrode tab 20.

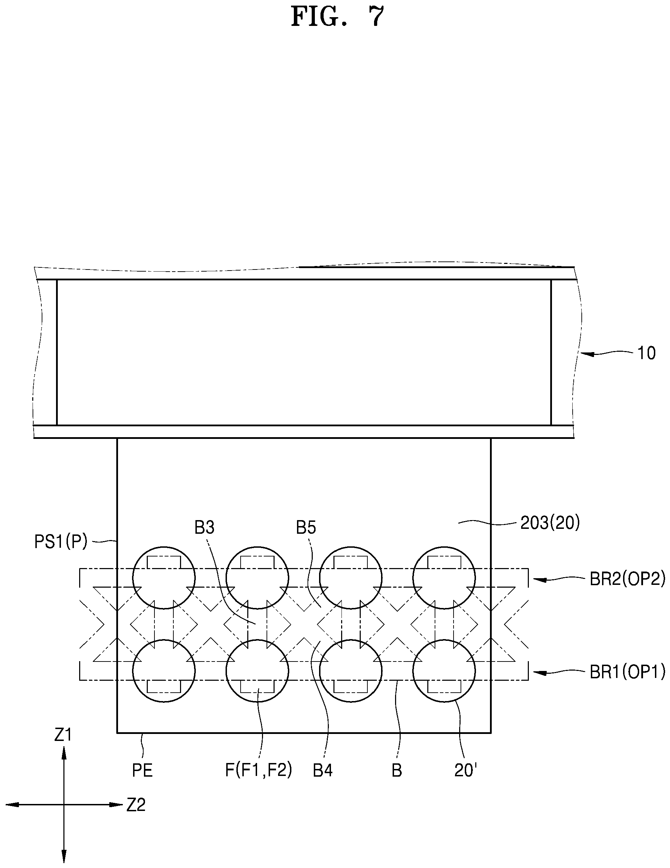

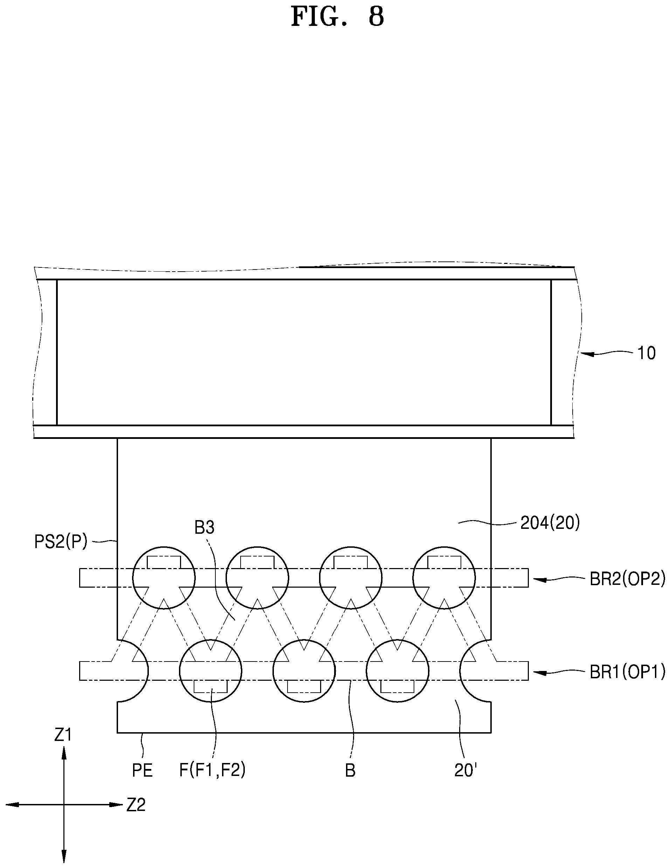

In an implementation, as shown in FIGS. 7 and 8, openings 20' in an electrode tab 20 may be provided in a plurality columns that are arranged in a first direction Z1, and a plurality of openings 20' in each of the columns may be arranged in a row in the second direction Z2. In an implementation, as shown in FIG. 7, a first row of openings OP1 and a second row of openings OP2, among the openings 20' in the plurality of columns, arranged in the first direction Z1, may be at positions aligned with each other in the first direction Z1. The plurality of openings 20' may be in a matrix pattern and aligned with each other in the first and second directions Z1 and Z2. In an implementation, a soldering bridge B connecting first and second thermal bonding points F1 and F2 formed through the openings 20' adjacent to each other in the second direction Z2 may include arrays BR1 and BR2 of the soldering bridge B that form thermal bonding points F at the openings 20' spaced apart from each other along rows of openings 20' arranged in the second direction Z2 and continuously connect the thermal bonding points F to each other. Another soldering bridge B3 may extend in the first direction Z1 between a first array or row of soldering bridges BR1 and a second array or row of soldering bridges BR2, which are adjacent to each other in the first direction Z1 and each of which continuously extends in the second direction Z2. In an implementation, it is possible to form the soldering bridges B and B3 extending in the second and first direction Z2 and Z1, respectively. In an implementation, as shown in FIG. 7, the soldering bridges B and B3 may extend in the second and first directions Z2 and Z1, respectively. In an implementation, solid sections between the openings 20' adjacent to each other in the first direction Z1 and solid sections between the openings 20' adjacent to each other in the second direction Z2 may be pressed against the connection tab 30, and thus, the electrode tab 20 and the connection tab 30 may be bonded to each other. In an implementation, as illustrated in FIG. 7, the soldering bridges B and B3 may be between the first and second thermal bonding points F1 and F2 formed through the openings 20' adjacent to each other in the first and second directions Z1 and Z2. In an implementation, the solid sections of the electrode tab 20 between the openings 20' adjacent to each other in the first and second directions Z1 and Z2 may be pressed against the connection tab 30, and the electrode tab 20 may be bonded to the connection tab 30. In an implementation, soldering bridges B4 and B5 may be between the first and second thermal bonding points F1 and F2 formed through the openings 20' adjacent to each other in a zigzag direction simultaneously following the first and second directions Z1 and Z2 (e.g., diagonally). In an implementation, solid sections of the electrode tab 20 between the openings 20' adjacent to each other in the zigzag direction simultaneously following the first and second directions Z1 and Z2 may be pressed against the connection tab 30, and the electrode tab 20 may be bonded to the connection tab 30. In an implementation, as illustrated in FIG. 7, the soldering bridges B, B3, B4, and B5 may make connections between the openings 20' adjacent to each other in the first direction Z1, the second direction Z2, and the zigzag (e.g., diagonal) direction that simultaneously follows the first and second directions Z1 and Z2 or between the first and second thermal bonding points F1 and F2 formed through the openings 20' adjacent to each other. The solid sections between the openings 20' adjacent to each other in the first and second directions Z1 and Z2 and in the zigzag direction simultaneously following the first and second directions Z1 and Z2 may be pressed, and thus, the electrode tab 20 and the connection tab 30 may be bonded to each other by the plurality of soldering bridges B, B3, B4, and B5. In an implementation, in an array of 2x2 openings 20' arranged adjacent to each other in the first and second directions Z1 and Z2, a total of six soldering bridges B may be formed, which include two soldering bridges B3 following the first direction Z1, two soldering bridges B following the second direction Z2, and two soldering bridges B4 and B5 simultaneously following the first and second directions Z 1 and Z2.

In an implementation, as shown in FIG. 8, a soldering bridge B connecting first and second thermal bonding points F1 and F2 formed through the openings 20' adjacent to each other may include arrays BR1 and BR2 of the soldering bridge B that form thermal bonding points F at the openings 20' spaced apart from each other along rows of openings 20' arranged in the second direction Z2 and continuously connect the thermal bonding points F to each other. A first column of soldering bridges BR1 and a second column of soldering bridges BR2, which are adjacent to each other in the first direction Z1 and each of which continuously extends in the second direction Z2, may form another soldering bridge B3 in a zigzag direction that follows the first and second directions Z1 and Z2. In an implementation, it is possible to form the soldering bridges B and B3 extending in the second direction Z2 and the zigzag direction, respectively. In an implementation, as shown in FIG. 8, the plurality of soldering bridges B and B3 may extend in the second direction Z2 and the zigzag direction, respectively. Also, solid sections between the openings 20' adjacent to each other in the second direction Z2 and solid sections between the openings 20' adjacent to each other in the zigzag direction may be pressed against the connection tab 30, and thus, the electrode tab 20 and the connection tab 30 may be bonded to each other. In an implementation, as shown in FIG. 8, a first row of openings OP1 and a second row of openings OP2, may be formed at positions alternate with each other. In an implementation, the first and second rows of openings OP1 and OP2 may be at positions that shift forward or rearward from each other in the second direction Z2, e.g., such that the openings of the first row of openings OP1 may not be aligned in the first direction Z1 with the second row of openings OP2. In an implementation, the first and second rows of openings OP1 and OP2 may be at positions that alternate with each other, and the soldering bridge B3 connecting the first column of openings OP1 and the second column of openings OP2 to each other may extend in the zigzag or diagonal direction that simultaneously follows the first and second directions Z1 and Z2. The solid sections of the electrode tab 20 extending in the zigzag pattern between the first and second rows of openings OP1 and OP2 may be pressed, and thus, the electrode tab 20 and the connection tab 30 may be bonded to each other. In an implementation, as shown in FIGS. 7 and 8, the soldering bridges B3, B4, and B5 may be arranged in the zigzag pattern simultaneously following the first and second directions Z1 and Z2. In an implementation, as illustrated in FIG. 8, the first and second columns of openings OP1 and OP2 may be alternately arranged at front or rear positions in the second direction Z2, and thus, the solid section of the electrode tab 20 between the openings 20' that are relatively close to each other in the zigzag direction may be relatively narrow. Therefore, the distance between the first and second thermal bonding points F1 and F2 formed through the openings 20' relatively close to each other in the zigzag direction may become narrow, and thus, the solid sections of the electrode tab 20 may be strongly pressed. Also, reference numbers 201, 202, 203, and 204, which have not mentioned in FIGS. 5 to 8, may be respectively assigned to distinguish the electrode tabs 20 applied to the embodiments, and may respectively correspond to the electrode tabs of the embodiments.

By way of summation and review, in an electrical connection between an electrode tab and a connection tab that form a charging/discharging path of a battery cell of the battery pack, the electrode tab could have relatively low affinity to a soldering material, and thus, it could be difficult to form direct thermal-bonding with the soldering material. The electrode tab and the connection tab may be bonded to each other by thermal-bonding between a soldering material and the connection tab having good affinity to the soldering material. Even in the case of an electrode tab that is difficult to be used for thermal-bonding, such as soldering, due to the material properties thereof, it is possible to form an electrical connection by thermal-bonding using a soldering material. One or more embodiments include a battery pack.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
Clause 1. A battery pack comprising a battery cell, an electrode tab drawn out from the battery cell, a connection tab overlapping the electrode tab and bonded to the electrode tab, and a soldering material bonding the electrode tab and the connection tab to each other, wherein the connection tab and the electrode tab respectively comprise first and second metal materials having different affinities to the soldering material, and wherein the soldering material forms a soldering bridge which has two ends respectively corresponding to first and second thermal bonding points to the connection tab exposed from the electrode tab, and the soldering bridge connects the first and second thermal bonding points to each other while surrounding a portion of the electrode tab between the first and second thermal bonding points across the portion of the electrode tab.
Clause 2. The battery pack as claimed in clause 1, wherein the affinity of the first metal material to the soldering material is higher than the affinity of the second metal material to the soldering material.
Clause 3. The battery pack as claimed in clause 1, wherein the first and second thermal bonding points pass through openings that are formed inside the electrode tab and are adjacent to each other, and the portion of the electrode tab comprises a solid section between the openings adjacent to each other.
Clause 4. The battery pack as claimed in clause 1, wherein the first thermal bonding point passes through an opening formed inside the electrode tab, the second thermal bonding point is formed on the outside of the electrode tab with respect to a contour line surrounding an outermost portion of the electrode tab, and the portion of the electrode tab comprises a solid section between the opening formed inside the electrode tab and the contour line of the electrode tab.
Clause 5. The battery pack as claimed in clause 1, wherein the electrode tab comprises an opening through which the connection tab is exposed.
Clause 6. The battery pack as claimed in clause 5, wherein the electrode tab comprises a plurality of openings spaced apart from each other, and the soldering material forms a thermal bonding point with the connection tab at each of the plurality of openings and forms a plurality of soldering bridges continuously connected to each other, wherein each of the soldering bridges connects the thermal bonding points, which are spaced apart from each other, to each other while crossing a solid section of the electrode tab formed between the openings adjacent to each other.
Clause 7. The battery pack as claimed in clause 5, wherein the electrode tab comprises a plurality of openings which are arranged in a second direction crossing a first direction in which the electrode tab is drawn out from the battery cell.
Clause 8. The battery pack as claimed in clause 7, wherein the plurality of openings are provided in a plurality of columns arranged in the first direction, and the openings in each of the columns are arranged in the second direction.
Clause 9. The battery pack as claimed in clause 5, wherein the opening is provided in plurality in which a constant unit shape is repeated uniformly.
Clause 10. The battery pack as claimed in clause 1, wherein the electrode tab exposes the connection tab through the outside of the electrode tab with respect to a contour line surrounding an outermost portion of the electrode tab.
Clause 11. The battery pack as claimed in clause 10, wherein the contour line defining the outside of the electrode tab exposing the connection tab comprises: an end line configured to terminate the electrode tab in a first direction in which the electrode tab is drawn out from the battery cell; and a pair of side lines respectively extending from two ends of the end line and facing each other.
Clause 12. The battery pack as claimed in clause 10, wherein the contour line of the electrode tab comprises a contour line that is recessed toward the inside of the electrode tab.
Clause 13. The battery pack as claimed in clause 12, wherein the contour line of the electrode tab comprises a pair of side lines facing each other and recessed toward the inside of the electrode tab and an end line having a straight shape and connecting ends of the side lines to each other.
Clause 14. The battery pack as claimed in clause 1, wherein the electrode tab comprises: i) a plurality of openings in which a circular unit shape is repeated uniformly inside the electrode tab; and ii) a contour line recessed concavely toward the inside of the electrode tab, wherein the plurality of openings and the contour line recessed concavely inward have same curvature.
Clause 15. The battery pack as claimed in clause 14, wherein an interval between the openings adjacent to each other inside the electrode tab is equal to an interval between the opening on the outermost side of the electrode tab and the contour line recessed inward, which are adjacent to each other.
Clause 16. The battery pack as claimed in clause 1, wherein the soldering material forms a soldering block that surrounds a stack of the electrode tab and the connection tab.
Clause 17. The battery pack as claimed in clause 16, wherein inside the soldering block, a solid area of the electrode tab occupied by a solid section of the electrode tab is less than a solid area of the connection tab occupied by a solid section of the connection tab.
Clause 18. The battery pack as claimed in clause 16, wherein inside the soldering block, an enclosed area of the electrode tab surrounded by a contour line on the outermost side of the electrode tab is less than an enclosed area of the connection tab surrounded by a contour line on the outermost side of the connection tab.
Clause 19. The battery pack as claimed in clause 16, wherein the soldering block has a sufficient thickness in a direction, in which the electrode tab and the connection tab are stacked, to surround the stack of the electrode tab and the connection tab so that the electrode tab and the connection tab are not exposed through the soldering block.
Clause 20. The battery pack as claimed in clause 16, wherein in the electrode tab and the connection tab stacked on each other, a first portion of the soldering block, which is formed on the electrode tab, is thermal-bonded with the connection tab exposed via the electrode tab, and a second portion of the soldering block, which is formed on the connection tab, is directly thermal-bonded with the connection tab without the electrode tab therebetween.
Clause 21. The battery pack as claimed in clause 20, wherein the electrode tab exposes a portion of the connection tab in the first portion of the soldering block, and the connection tab does not expose the electrode tab in the second portion of the soldering block.
Clause 22. The battery pack as claimed in clause 21, wherein an opening of the connection tab is formed at a position away from the electrode tab outside the electrode tab so that the electrode tab is not exposed via the opening of the connection tab.
Clause 23. The battery pack as claimed in clause 20, wherein a thickness of the first portion of the soldering block is greater than a thickness of the second portion of the soldering block in a direction in which the electrode tab and the connection tab are stacked.

## Claims

1. A battery pack, comprising:
a battery cell;
an electrode tab drawn out from the battery cell in a first direction;
a connection tab overlapping the electrode tab and bonded to the electrode tab; and
a soldering material bonding the electrode tab and the connection tab to each other,
wherein:
the connection tab includes a first metal material and the electrode tab includes second metal material, the first metal material having an affinity to the soldering material that is different from an affinity of the second metal material to the soldering material,
the soldering material forms a soldering bridge that has two ends respectively corresponding to a first thermal bonding point and a second thermal bonding point to a portion of the connection tab exposed by the electrode tab, and
the soldering bridge connects the first and second thermal bonding points to each other and extends across a portion of the electrode tab between the first and second thermal bonding points.

2. The battery pack as claimed in claim 1, wherein the affinity of the first metal material to the soldering material is higher than the affinity of the second metal material to the soldering material.

3. The battery pack as claimed in claim 1 or claim 2, wherein:
the electrode tab includes openings therein, the openings being adjacent to each other,
the first and second thermal bonding points pass through the openings in the electrode tab, and
the portion of the electrode tab includes a solid section between adjacent ones of the openings.

4. The battery pack as claimed in any one of the preceding claims, wherein:
the electrode tab includes an opening therein,
the first thermal bonding point passes through the opening in the electrode tab,
the second thermal bonding point is outside of the electrode tab with respect to a contour line surrounding an outermost portion of the electrode tab, and
the portion of the electrode tab includes a solid section between the opening in the electrode tab and the contour line of the electrode tab.

5. The battery pack as claimed in any one of the preceding claims, wherein the electrode tab includes at least one opening through which the connection tab is exposed, and optionally wherein:
the electrode tab includes a plurality of openings spaced apart from each other,
the soldering material forms a thermal bonding point with the connection tab at each of the plurality of openings and forms a plurality of soldering bridges continuously connected to each other, and
each of the soldering bridges connects the thermal bonding points, which are spaced apart from each other, to each other while crossing a solid section of the electrode tab formed between the openings adjacent to each other.

6. The battery pack as claimed in claim 5, wherein the electrode tab includes a plurality of openings, and wherein the plurality of openings are one or more of:
a) arranged in a second direction crossing the first direction;
b) in a plurality of columns arranged in the first direction, and the openings in each of the columns are aligned in a second direction crossing the first direction; and/or
c) each having a uniform unit shape.

7. The battery pack as claimed in any one of the preceding claims, wherein the electrode tab exposes the connection tab outside of the electrode tab with respect to a contour line surrounding an outermost portion of the electrode tab, and optionally wherein the contour line defining the outside of the electrode tab exposing the connection tab includes:
an end line at an edge of the electrode tab in the first direction; and
a pair of side lines respectively extending from two ends of the end line and facing each other.

8. The battery pack as claimed in claim 7, wherein the contour line of the electrode tab includes a region that is recessed inwardly toward an inside of the electrode tab, and optionally wherein the contour line of the electrode tab includes:
a pair of side lines that face each other and are recessed inwardly toward the inside of the electrode tab, and
an end line having a straight shape and connecting ends of the side lines to each other.

9. The battery pack as claimed in any one of the preceding claims, wherein:
the electrode tab includes:
a plurality of openings each having a uniform circular unit shape inside the electrode tab; and
a contour line recessed concavely toward the inside of the electrode tab, and
the plurality of openings and the contour line recessed concavely inwardly have a same curvature, and optionally wherein a distance between the openings adjacent to each other inside the electrode tab is equal to a distance between the opening on the outermost side of the electrode tab and the contour line recessed inwardly, which are adjacent to each other.

10. The battery pack as claimed in any one of the preceding claims, wherein the soldering material forms a soldering block that surrounds a stack of the electrode tab and the connection tab, and optionally wherein, inside the soldering block, a solid area of the electrode tab is less than a solid area of the connection tab.

11. The battery pack as claimed in claim 10, wherein, inside the soldering block, an enclosed area of the electrode tab surrounded by a contour line on the outermost side of the electrode tab is smaller than an enclosed area of the connection tab surrounded by a contour line on the outermost side of the connection tab.

12. The battery pack as claimed in claim 10 or claim 11, wherein the soldering block has a thickness in a direction, in which the electrode tab and the connection tab are stacked, such that the soldering block surrounds the stack of the electrode tab and the connection tab so that the electrode tab and the connection tab are not exposed through the soldering block.

13. The battery pack as claimed in claim 10, claim 11 or claim 12, wherein, in the electrode tab and the connection tab stacked on each other:
a first portion of the soldering block, which is on the electrode tab, is thermal-bonded with regions of the connection tab that are exposed via the electrode tab, and
a second portion of the soldering block, which is on the connection tab, is directly thermal-bonded with the connection tab without the electrode tab therebetween.

14. The battery pack as claimed in claim 13, wherein:
the electrode tab exposes a portion of the connection tab in the first portion of the soldering block, and
the connection tab does not expose the electrode tab in the second portion of the soldering block, and optionally wherein an opening of the connection tab is at a position spaced apart from the electrode tab outside the electrode tab so that the electrode tab is not exposed via the opening of the connection tab.

15. The battery pack as claimed in claim 13 or claim 14, wherein a thickness of the first portion of the soldering block is greater than a thickness of the second portion of the soldering block in a direction in which the electrode tab and the connection tab are stacked.
